# EUROPEAN PATENT APPLICATION

(11) **EP 4 395 198 A1**
(43) Date of publication of application: **03.07.2024**
(21) Application number: 22894715.6
(22) Date of filing: 11.11.2022
(51) Int. Cl.: H04B 7/06, H04W 72/04

(54) **BEAM DETERMINATION METHOD, NODE AND STORAGE MEDIUM**

(30) Priority: 19.11.2021 CN 202111399935
(71) Applicant: ZTE Corporation, Shenzhen, Guangdong 518057 (CN)
(72) Inventor: XIAO, Huahua, Shenzhen, Guangdong 518057 (CN); ZHANG, Jiayi, Shenzhen, Guangdong 518057 (CN); LU, Zhaohua, Shenzhen, Guangdong 518057 (CN); WU, Hao, Shenzhen, Guangdong 518057 (CN); ZHANG, Shujuan, Shenzhen, Guangdong 518057 (CN); JIANG, Chuangxin, Shenzhen, Guangdong 518057 (CN)
(74) Representative: Regimbeau
(86) International application number: PCT/CN2022/131350
(87) International publication number: WO 2023/088178

(57) **Abstract**

Provided are a beam determination method, a node and a storage medium. The method includes the following: receiving a beam configuration parameter; and determining a first type of beam according to the beam configuration parameter.

## Description

### TECHNICAL FIELD

The present application relates to the technical field of wireless communications and, in particular, a beam determination method, a node and a storage medium.

### BACKGROUND

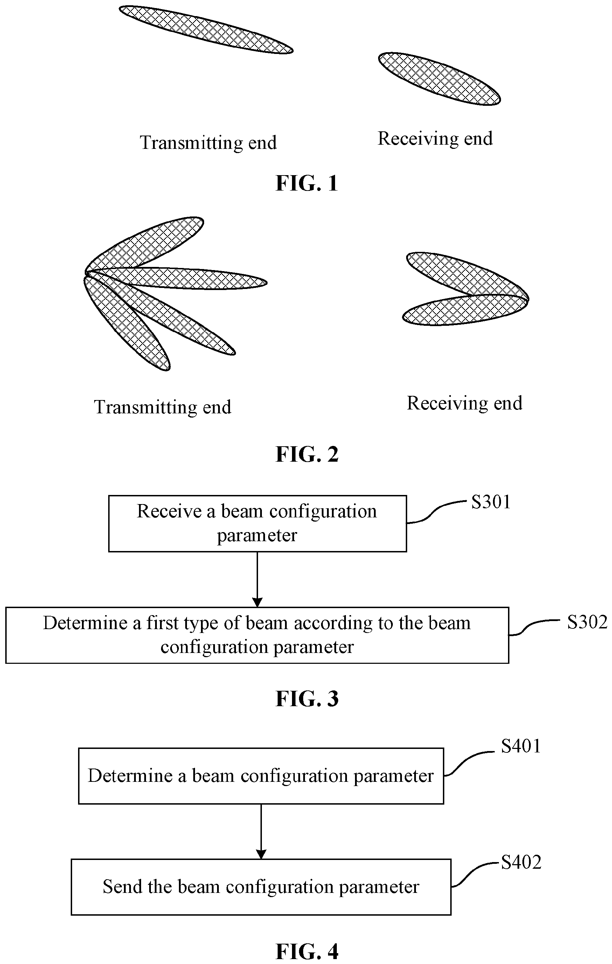

A high frequency with abundant spectrum resources is an effective means to improve the performance of a wireless system. However, since the high frequency has a relatively high carrier frequency and a large path loss, a sending direction needs to be aligned with a user according to the beamforming technique, thereby concentrating energy to transmit information so as to overcome performance degradation caused by an excessively large path loss. Generally, a method for obtaining a direction of a transmit or receive beam is to perform beam sweeping in each direction and select a beam direction with relatively good performance as the beam direction for transmitting the information. When the beam sweeping is performed, each beam corresponds to one reference signal resource. In a case of a very thin beam, many beam directions need to be swept, and correspondingly, an overhead of the reference signal resource is very large. As shown in FIG. 1, if a regular beam, such as a single beam based on discrete Fourier transform (DFT), is used, more beams in different directions need to be swept when beam sweeping is performed, thereby requiring a larger overhead of pilot resources. As shown in FIG. 2, if an irregular beam resource, such as a beam including multiple superimposed beam directions, is used, beams in multiple directions can be simulated at a time, thereby reducing the number of times of beam sweeping. However, a beam orientation, beam width and beam gain of the irregular beam are all uncertain. At present, although artificial intelligence (AI) can reduce the number of reference signal resources for beam sweeping to a certain extent, too many samples need to be trained due to a relatively thin beam at a parameter training stage, resulting in prohibitive cost.

### SUMMARY

A main object of embodiments of the present application is to provide a beam determination method, a node and a storage medium to overcome a drawback of a relatively large overhead of pilot resources or a relatively high cost for determining a beam in the related art.

The embodiments of the present application provide a beam determination method. The method includes the following: a beam configuration parameter is received; and a first type of beam is determined according to the beam configuration parameter.

The embodiments of the present application provide a beam determination method. The method includes the following: a beam configuration parameter is determined; and the beam configuration parameter is sent; where the beam configuration parameter is used for determining a first type of beam.

The embodiments of the present application provide a beam determination apparatus. The apparatus includes a receiving module and a processing module. The receiving module is configured to receive a beam configuration parameter; and the processing module is configured to determine a first type of beam according to the beam configuration parameter.

The embodiments of the present application provide a beam determination apparatus. The apparatus includes a determination module and a sending module. The determination module is configured to determine a beam configuration parameter; and the sending module is configured to send the beam configuration parameter; where the beam configuration parameter is used for determining a first type of beam.

The embodiments of the present application provide a communication node including a processor, and the processor, when executing a computer program, implements the beam determination method provided in any one of the embodiments of the present application.

The embodiments of the present application provide a readable and writeable storage medium storing a computer program which, when executed by a processor, implements the beam determination method provided in any one of the embodiments of the present application.

The embodiments of the present application provide the beam determination method, a node and a storage medium. The method includes receiving the beam configuration parameter and determining the first type of beam according to the beam configuration parameter. Through the method, the first type of beam can be determined, and a value of a parameter of an artificial intelligence network can be acquired based on the determined first type of beam, or beam sweeping can be performed to determine a beam for transmission, thereby reducing the number of times of training of the artificial intelligence network or reducing the number of times of beam sweeping to overcome the drawback of a relatively large overhead of the pilot resources or a relatively high cost for beam determination in the related art.

### BRIEF DESCRIPTION OF DRAWINGS

FIG. 1 is a schematic diagram illustrating that beam sweeping is performed based on a regular beam in the related art.
FIG. 2 is a schematic diagram illustrating that beam sweeping is performed based on an irregular beam in the related art.
FIG. 3 is a flowchart of a beam determination method according to an embodiment of the present application.
FIG. 4 is a flowchart of another beam determination method according to an embodiment of the present application.
FIG. 5 is a structure diagram of a beam determination apparatus according to an embodiment of the present application.
FIG. 6 is a structure diagram of another beam determination apparatus according to an embodiment of the present application.
FIG. 7 is a structure diagram of another beam determination apparatus according to an embodiment of the present application.
FIG. 8 is a structure diagram of another beam determination apparatus according to an embodiment of the present application.
FIG. 9 is a structure diagram of a communication node according to an embodiment of the present application.

### DETAILED DESCRIPTION

To illustrate objects, technical solutions and advantages of the present application clearer, embodiments of the present application are described hereinafter in detail in conjunction with drawings. It is to be noted that if not in collision, the embodiments of the present application and features therein may be combined with each other in any manner.

In addition, in the embodiments of the present application, words such as "optionally" or "exemplarily" are used for representing examples, illustrations, or descriptions. Any embodiment or design described as "optionally" or "exemplarily" in the embodiments of the present application should not be explained as being more preferred or advantageous than other embodiments or designs. Rather, the use of the words "optionally" or "exemplarily" is intended to present related concepts in a specific manner.

In the embodiments of the present application, a terminal may be a cellular telephone, a cordless telephone, a personal digital assistant (PDA), a handheld device having a wireless communication function, a computing device, another processing device connected to a wireless modem, an in-vehicle device, a wearable device, a terminal device in a 5G network or a future network beyond 5G, or the like; and a base station may be an evolutional Node B (eNB or eNodeB) in long term evolution (LTE) or long term evolution advanced (LTE-A), or a base station device of a 5G network represented by new radio (NR), or a base station in a future communication system. Further, the base station may include various macro base stations, micro base stations, home eNodeBs, radio remote, routers, or various devices on the network side such as a primary cell and a secondary cell, which is not limited in the embodiments.

Further, to facilitate a clear understanding of the schemes provided in the embodiments of the present application, the related concepts involved in the embodiments of the present application are described below.

Signaling includes, but is not limited to, radio resource control (RRC) or a media access control control element (MAC CE).

Information of a beam may include at least one of the following: an angle of arrival (AOA), an angle of departure (AOD), a zenith angle of departure (ZOD), a zenith angle of arrival (ZOA), a vector or vector index constructed according to at least one angle of the AOA, the AOD, the ZOD or the ZOA, a discrete Fourier transformation (DFT) vector, a code word in a codebook, a transmit beam, a receive beam, a transmit beam group, a receive beam group, a transmit beam index, a receive beam index, a transmit beam group index or a receive beam group index. In some embodiments, the beam may refer to a spatial filter or a spatial receiving/transmitting parameter, and spatial filtering may be at least one of the following: a DFT vector, a precoding vector, a DFT matrix, a precoding matrix, a vector constituted by a linear combination of multiple DFTs, or a vector constituted by a linear combination of multiple precoding vectors. A beam combination may be a linear combination or a non-linear combination of multiple vectors (including, but not limited to, DFT vectors, precoding vectors or vectors constituted by DFTs).

In the embodiments of the present application, an index and an indicator are interchangeable concepts, and a vector quantity and a vector are interchangeable concepts.

Based on the above concepts, the embodiments of the present application provide a flowchart of a beam determination method that may be applied to a terminal. As shown in FIG. 3, the method may include, but is not limited to, the operations described below.

In S301, a beam configuration parameter is received.

In the embodiments of the present application, the beam configuration parameter may be sent by a node communicating with the terminal, for example, the beam configuration parameter is sent by a base station to the terminal. In an embodiment, the above beam configuration parameter may be determined by a first artificial intelligence network, and in an embodiment, the above beam configuration parameter may also be determined by the base station in a preconfigured manner or determined through calculation according to a channel scenario. In the embodiments of the present application, the beam configuration parameter determination is not limited to these manners.

Exemplarily, the above beam configuration parameter includes at least one of the following: a beam width, the number of beam directions, an array element phase, array element power, a beam gain, a beam index, a beam combination or an initial index of a random beam.

Further, the beam width in the beam configuration parameter may be used for determining a wide beam, at least one of the number of beam directions, the array element phase or the array element power included in the beam configuration parameter may be used for determining an irregular beam or a multi-directional beam, at least one of the beam index or the beam width included in the beam configuration parameter may be used for determining a random beam, and at least one of the beam width, the array element power or the array element phase may be used for determining a non-constant mode beam.

In S302, a first type of beam is determined according to the beam configuration parameter.

In the embodiments of the present application, the first type of beam may be used for training a parameter of an artificial intelligence network, for example, the first type of beam may be used for acquiring a value of a parameter of a second artificial intelligence network, or the first type of beam may be used for beam sweeping to determine a beam for transmission (such as a second type of beam). In this manner, based on the determined first type of beam, the number of times of training of the second artificial intelligence network can be reduced, or the number of times of beam sweeping can be reduced, thereby a drawback that determining a beam requires a relatively large overhead of pilot resources or a relatively high cost in the related art can be overcome.

In an example, the above first type of beam may include at least one of the following: the wide beam, the irregular beam, the multi-directional beam, the random beam or the non-constant mode beam.

Further, the terminal may determine the second type of beam according to the first type of beam and the parameter of the second artificial intelligence network, and the second type of beam may be used for transmitting signaling or data between the terminal and the base station. For example, the terminal trains the artificial intelligence network with the first type of beam to acquire the value of the parameter of the second artificial intelligence network, an index of the optimal second type of beam suitable for the terminal to transmit information is selected according to the determined value of the parameter of the second artificial intelligence network, and the data is transmitted by the beam corresponding to the index of the optimal second type of beam.

Further, the terminal may determine the second type of beam according to the parameter of the second artificial intelligence network, and the parameter of the second artificial intelligence network may be acquired according to the training based on the first type of beam.

Exemplarily, in the embodiments of the present application, assuming that a beam is divided into the first type of beam and the second type of beam according to the beam width, the first type of beam may be classified as a wide beam, and correspondingly, the second type of beam may be classified as a narrow beam. The wide beam may be understood as a beam whose 1/K power beamwidth is greater than a first threshold, and the narrow beam may be understood as a beam whose 1/K power beamwidth is less than a second threshold. Each of the preceding first threshold and second threshold is a number greater than 0, the second threshold is less than the first threshold, and K is an integer greater than 0, for example, a value of K is 2, 5 or 10.

In an embodiment, the above first type of beam may also be classified as an irregular beam, and the above second type of beam is classified as a regular beam, that is, the beam is divided into the two types according to whether a beam is regular. The irregular beam may be understood as a beam having an irregular power radiation shape, for example, a beam having multiple different peak values. The regular beam may be understood as a beam having a regular power radiation shape, for example, the beam has only one peak value. For example, a beam constructed by a DFT vector is the regular beam.

In an embodiment, the beam may also be divided into a multi-directional beam and a single-directional beam. For example, the first type of beam is classified as the multi-directional beam, and the second type of beam is classified as the single-directional beam. The multi-directional beam may be a beam constituted by a linear combination of multiple DFT vectors or a beam constructed by a linear combination of multiple DFTs, and the single-directional beam may be a beam constituted by one DFT vector or a beam constructed by one DFT.

It is to be noted that the above DFT vector constructing the beam may include, but is not limited to, a vector constituted by two or more DFT vectors through Kronecker product.

In the embodiments of the present application, the first type of beam may also be classified as a random beam, and the second type of beam is classified as a non-random beam. The random beam refers to a beam whose beam direction is generated in a random manner, such as the wide beam, narrow beam, regular beam, irregular beam, multi-directional beam and single-directional beam. Pointing directions are randomly generated each time these beams transmit information. The non-random beam refers to a beam whose beam direction is determined according to channel state information, such as at least one of the narrow beam, the regular beam or the single-directional beam.

In an example, the beam may also be divided into two beam types, namely, a non-constant mode beam and a constant mode beam. For example, the first type of beam is classified as the non-constant mode beam, and the second type of beam is classified as the constant mode beam. The non-constant mode beam means that the absolute value of at least one element in a vector corresponding to the beam is different from the absolute values of the other elements, and the constant mode beam means that the absolute value of each element in a vector corresponding to the beam is identical, such as a DFT vector.

Further, the above transmission may include receiving or sending, for example, sending information or receiving information. The information includes, but is not limited to, signaling or data. The signaling includes uplink control information, or downlink control information, or a radio resource for carrying various control information, such as a physical uplink control channel and a physical downlink control channel. The data includes uplink data or downlink data, such as a physical downlink shared channel and a physical uplink shared channel.

In an example, a mapping relationship exists between the first type of beam and the second type of beam. For example, the terminal is used as an example. The terminal may determine the mapping relationship between the first type of beam and the second type of beam based on at least one of the following manners. For example, the terminal determines the mapping relationship between the first type of beam and the second type of beam by using a third artificial intelligence network, the terminal determines the mapping relationship between the first type of beam and the second type of beam in an agreed manner, or the terminal determines the mapping relationship between the first type of beam and the second type of beam in a manner of receiving configuration signaling.

It is to be noted that the mapping relationship between the first type of beam and the second type of beam may be understood as a correlation between the first type of beam and the second type of beam, and the first type of beam and the second type of beam that have the correlation also have certain similarity in the transmission function. Therefore, a parameter of a second type neural network trained with the first type of beam may be generalized to be used for selecting the second type of beam, and after a beam selected when the first type of beam is used for sweeping is replaced with the second type of beam having the correlation with the first type of beam, the second type of beam may be used for transmitting information (including signaling or data). For example, the terminal performs beam sweeping by using the first type of beam to determine an index of the optimal first type of beam for transmitting information, determines an index of the optimal second type of beam corresponding to the index of the optimal first type of beam based on the correlation between the first type of beam and the second type of beam and transmits the data by using the beam corresponding to the index of the optimal second type of beam.

In an embodiment, the two beams having the correlation may have at least one of the following characteristics: having the same value of a quasi co-location (QCL) parameter; having the same value of a spatial receiving (Rx) parameter; having the same value of a transmission configuration indication (TCI); having the same value of a QCL type D; or having a certain overlap in space coverage, for example, the first type of beam covers a coverage region of the second type of beam, a transmission direction of the first type of beam includes a transmission direction of the second type of beam, and an indication direction of the first type of beam includes an indication direction of the second type of beam.

In an example, the above terminal may further be configured to receive a gain difference between the first type of beam and the second type of beam, and the gain difference may be used for determining transmit power of the second type of beam.

Exemplarily, the two types of beam that have the correlation have a difference in beam gain. For example, a gain of a wide beam is less than a gain of a narrow beam, a gain of a multi-directional beam is less than a gain of a single-directional beam, a gain of an irregular beam is less than a gain of a regular beam, and a gain of a non-constant mode beam is less than a gain of a constant mode beam. After acquiring the gain difference between the first type of beam and the second type of beam that have the correlation, the base station may send the gain difference to the terminal, and the terminal adjusts power for transmitting information according to the received gain difference to avoid a performance loss caused by the difference. For example, when data or signals are sent, sending power of the second type of beam is adjusted, or when signals or data are received, receiving power of the second type of beam is adjusted, or a value of the receiving power for calculating channel quality is adjusted according to the gain difference between the first type of beam and the second type of beam, for example, power of a signal part for calculating a signal-to-noise and interference ratio (SINR) is adjusted, and a value of receiving power in reference signal received power (RSRP) is adjusted.

In an example, before S301, the embodiments of the present application further provide an implementation manner including that the terminal sends a terminal beam capability to the base station.

Exemplarily, the terminal beam capability may include at least one of the following: a capability of supporting the first type of beam, a capability of supporting a beam type of the first type of beam or a capability of processing the first type of beam.

For example, the terminal reports the terminal beam capability to the base station, and after receiving the capability reported by the terminal, the base station may determine, based on the terminal beam capability reported by the terminal, whether to configure the beam configuration parameter for the terminal.

In the embodiments of the present application, the preceding first artificial intelligence network, second artificial intelligence network and third artificial intelligence network may all be referred to as artificial intelligence, and the artificial intelligence may include machine learning, depth learning, reinforcement learning, transfer learning, deep reinforcement learning and the like. Exemplarily, in some embodiments, the artificial intelligence may be implemented by a neural network, and further, the neural network may include at least an input layer, an output layer and at least one hidden layer, where each layer of the neural network may include, but is not limited to, using at least one of a fully connected layer, a dense layer, a convolutional layer, a transposed convolutional layer, a directly connected layer, an activation function, a normalization layer or a pooling layer. In an embodiment, the above each layer of the neural network may further include a sub-neural network, such as a residual network, a dense network and a recurrent network.

Related functions of each artificial intelligence network are described in detail below.

The first artificial intelligence network is mainly used for generating the first type of beam suitable for the beam sweeping or training the second artificial intelligence network. For example, the number of elements, element phase information, element amplitude information and label information of received energy or RSRP are input into the first artificial intelligence network to obtain N beam configuration parameters of the first type of beam for the beam sweeping or the beam training through training.

The second artificial intelligence network is mainly used for selecting at least one beam in a beam set for receiving or sending information. The information includes, but is not limited to, signaling or data. For example, M transmit beams and N receive beams are present, where M and N are positive integers, and each of the M transmit beams corresponds to at least one channel state information reference signal (CSI-RS) resource or at least one CSI-RS resource set. The received CSI-RS resources or RSRP corresponding to the CSI-RS resources is input to the second artificial intelligence network, the second artificial intelligence network maps at least one input RSRP to an index of an optimal beam, that is, a beam index or a beam pair index for information transmission. The second artificial intelligence network uses a receive beam corresponding to the index of the optimal beam for transmitting information and feeds back a transmit beam index to the base station for the base station to transmit information. In an embodiment, the above RSRP may also be replaced with SINRs corresponding to the CSI-RS resources to select the beam index or the beam pair index. In an embodiment, the above M transmit beams may be a subset of all selectable beams, and the N beams may be a subset of all the selectable beams. Therefore, beams in all beam sets can be predicted in a beam subset by the second artificial intelligence network, that is, an effect of spatial domain interpolation is achieved to reduce an overhead of resources when beam sweeping is performed.

For example, assuming that 128 transmit beams and 32 receive beams are present, M = 16 transmit beams and N = 4 receive beams are uniformly selected therefrom for beam training. The received RSRP corresponding to the 16 transmit beams and the 4 receive beams is all input into the second artificial intelligence network to predict an optimal beam in the case of the 128 transmit beams and the 32 receive beams. That is, the second artificial intelligence network is mainly used for selecting the second type of beam. When the parameter of the second artificial network is trained, the first type of beam may be used to reduce the number of training beams or an overhead.

The third artificial intelligence network is mainly used for associating or mapping the first type of beam and the second type of beam. For example, the first type of beam and corresponding received RSRP or SINRs are input, and the corresponding second type of beam or a beam index of the second type of beam is output.

In the embodiments of the present application, to reduce the number of times of training of the second artificial intelligence network to achieve an object of reducing an overhead of resources, the terminal receives the beam configuration parameter sent by the base station and generates a beam for transmitting information according to the beam configuration parameter configured by the base station, for example, the terminal generates a transmit beam for sending information in uplink. The terminal respectively sends information on M sounding reference signal (SRS) resources according to the generated M transmit beams, the base station receives the sent reference signals, such as SRS resources for beam training, by using N receive beams, respectively, and at least one of receiving information corresponding to the M transmit beams respectively received by the N receive beams, or the RSRP or SINR corresponding to the receiving information is used as one sample. An optimal transmit beam index and receive beam index corresponding to the sample may be used as a label, and samples and labels of multiple terminals at one or more moments are collected as the input of the second artificial intelligence network to update the parameter of the second artificial intelligence network.

In an embodiment, to reduce the number of times of beam sweeping so as to achieve an object of reducing the overhead of resources, the terminal may receive the beam configuration parameter sent by the base station and generate the beam for transmitting information according to the beam configuration parameter configured by the base station, for example, the terminal generates a transmit beam for sending information in uplink. The terminal sends, according to the generated M transmit beams, information on M SRS resources, respectively, the base station receives the sent reference signals, such as SRS resources for beam training, by using N receive beams, respectively, and at least one of the receiving information corresponding to the M transmit beams respectively received by the N receive beams, or the RSRP or SINR corresponding to the receiving information as a basis for selecting the beam, for example, a transmit beam and a receive beam corresponding to the maximum value of the RSRP or SINRs corresponding to M*N beam pairs are used as the beam pair for transmitting information.

FIG. 4 is a flowchart of a beam determination method according to an embodiment of the present application. The method may be applied to a base station. As shown in FIG. 4, the method may include, but is not limited to, the operations described below.

In S401, a beam configuration parameter is determined.

In the embodiment of the present application, the base station may determine the beam configuration parameter by using a first artificial intelligence network. For example, input information required for training is input into the first artificial intelligence network, and a beam configuration parameter of a first type of beam for beam sweeping or beam training is trained by the first artificial intelligence network.

The beam configuration parameter may include at least one of the following: a beam width, the number of beam directions, an array element phase, array element power, a beam gain, a beam index, a beam combination, or an initial index of a random beam.

Further, the beam width in the beam configuration parameter may be used for determining a wide beam, at least one of the number of beam directions, the array element phase or the array element power included in the beam configuration parameter may be used for determining an irregular beam or a multi-directional beam, at least one of the beam index or the beam width included in the beam configuration parameter may be used for determining a random beam, and at least one of the beam width, the array element power, or the array element phase may be used for determining a non-constant mode beam.

In S402, the beam configuration parameter is sent.

The beam configuration parameter may be used for determining the first type of beam, and the first type of beam may be used for training a parameter of an artificial intelligence network, for example, the first type of beam may be used for acquiring a value of a parameter of a second artificial intelligence network, or the first type of beam may be used for beam sweeping to determine a beam (such as a second type of beam) for transmission. In this manner, based on the determined first type of beam, the number of times of training of the second artificial intelligence network can be reduced, or the number of times of the beam sweeping can be reduced, thereby overcoming the drawback that determining a beam requires a relatively large overhead of pilot resources or a relatively high cost in the related art.

Exemplarily, the above first type of beam may include at least one of the following: the wide beam, the irregular beam, the multi-directional beam, the random beam or the non-constant mode beam.

In an embodiment, the first type of beam and the parameter of the second artificial intelligence network may be used for determining the second type of beam for transmitting information. For example, a terminal trains the artificial intelligence network with the first type of beam to acquire the value of the parameter of the second artificial intelligence network, an index of the optimal second type of beam suitable for the terminal to transmit information is selected according to the determined value of the parameter of the second artificial intelligence network, and the information is transmitted by a beam corresponding to the index of the optimal second type of beam.

In the embodiment of the present application, a beam may be divided into the first type of beam and the second type of beam in the following manners. For example, the beam is divided into the first type of beam and the second type of beam according to the beam width, the first type of beam may be classified as a wide beam, and the second type of beam may be classified as a narrow beam. The wide beam may be understood as a beam whose 1/K power beamwidth is greater than a first threshold, and the narrow beam may be understood as a beam whose 1/K power beamwidth is less than a second threshold. Each of the first threshold and the second threshold is a number greater than 0, the second threshold is less than the first threshold, and K is an integer greater than 0, for example, a value of K is 2, 5 or 10.

Alternatively, the first type of beam may also be classified as an irregular beam, and the second type of beam is classified as a regular beam, that is, the beam is divided into the two types according to whether the beam is regular. The irregular beam may be understood as a beam having an irregular power radiation shape, for example, a beam has multiple different peak values. The regular beam may be understood as a beam having a regular power radiation shape, for example, a beam has only one peak value, such as a beam constructed by a DFT vector.

In an embodiment, the beam may also be divided into a multi-directional beam and a single-directional beam. For example, the first type of beam is classified as the multi-directional beam, and the second type of beam is classified as the single-directional beam. The multi-directional beam may be a beam constituted by a linear combination of multiple DFT vectors or a beam constructed by a linear combination of multiple DFTs, and the single-directional beam may be a beam constituted by a DFT vector or a beam constructed by a DFT. It is to be noted that the above DFT vector constructing the beam may include, but is not limited to, a vector constituted by two or more DFT vectors through Kronecker product.

Alternatively, the first type of beam may also be classified as a random beam, and the second type of beam may be classified as a non-random beam. The random beam refers to a beam whose beam direction is generated in a random manner, such as the wide beam, narrow beam, regular beam, irregular beam, multi-directional beam and single-directional beam. Pointing directions are randomly generated each time these beams transmit information. The non-random beam refers to a beam whose beam direction is determined according to channel state information, such as at least one of the narrow beam, the regular beam or the single-directional beam.

In an example, the beam may also be divided into two types of beams: a non-constant mode beam and a constant mode beam. For example, the first type of beam is classified as the non-constant mode beam, and the second type of beam is classified as the constant mode beam. The non-constant mode beam means that the absolute value of at least one element in a vector corresponding to the beam is different from the other elements, and the constant mode beam means that the absolute value of each element in a vector corresponding to the beam is identical, such as a DFT vector.

Further, that the above second type of beam transmits information may include sending information or receiving information. The information includes, but is not limited to, signaling or data. The signaling includes uplink control information, or downlink control information, or a radio resource for carrying various control information, such as a physical uplink control channel and a physical downlink control channel. The data includes uplink data or downlink data, such as a physical downlink shared channel and a physical uplink shared channel.

In an example, a mapping relationship exists between the first type of beam and the second type of beam.

Further, the base station may determine the mapping relationship between the first type of beam and the second type of beam in at least one of the manners described below. For example, the mapping relationship between the first type of beam and the second type of beam is determined through a third artificial intelligence network, the mapping relationship between the first type of beam and the second type of beam is determined in an agreed manner, or the mapping relationship between the first type of beam and the second type of beam is determined in a manner of sending configuration signaling.

It is to be noted that the mapping relationship between the first type of beam and the second type of beam may be understood as a correlation between the first type of beam and the second type of beam, and the first type of beam and the second type of beam that have the correlation also have certain similarity in the transmission function. Therefore, a parameter of a second type neural network trained with the first type of beam may be generalized to be used for selecting the second type of beam, and after a beam selected when the first type of beam is used for sweeping is replaced with the second type of beam having the correlation with the first type of beam, the second type of beam may be used for transmitting information (including signaling or data). For example, the terminal performs beam sweeping by using the first type of beam to determine an index of the optimal first type of beam for transmitting information, determines an index of the optimal second type of beam corresponding to the index of the optimal first type of beam based on the correlation between the first type of beam and the second type of beam and transmits data by using a beam corresponding to the index of the optimal second type of beam.

In an embodiment, the two beams having the correlation may have at least one of the following characteristics: having the same value of a QCL parameter; having the same value of a spatial Rx parameter; having the same value of a TCI; having the same value of a QCL type D; or having a certain overlap in space coverage, for example, the first type of beam covers a coverage region of the second type of beam, a transmission direction of the first type of beam includes a transmission direction of the second type of beam, and an indication direction of the first type of beam includes an indication direction of the second type of beam.

In an embodiment, the base station may also send a gain difference between the first type of beam and the second type of beam to the terminal, and the gain difference is used for determining transmit power of the second type of beam.

The two types of beam that have the correlation have a difference in beam gain. For example, a gain of a wide beam is less than a gain of a narrow beam, a gain of a multi-directional beam is less than a gain of a single-directional beam, a gain of an irregular beam is less than a gain of a regular beam, and a gain of a non-constant mode beam is less than a gain of a constant mode beam. After acquiring the gain difference between the first type of beam and the second type of beam that have the correlation, the base station may send the gain difference to the terminal, and the terminal adjusts power for transmitting information according to the received gain difference to avoid a performance loss caused by the difference.

In an embodiment, before S401, the base station may further receive a terminal beam capability reported by the terminal, and the terminal beam capability may include at least one of the following: a capability of supporting the first type of beam, a capability of supporting a beam type of the first type of beam, or a capability of processing the first type of beam.

The terminal reports the terminal beam capability of the terminal to the base station, and after receiving the capability reported by the terminal, the base station may determine, based on the capability reported by the terminal, whether to configure the beam configuration parameter for the terminal.

In the embodiment of the present application, the first artificial intelligence network is mainly used for generating the first type of beam suitable for the beam sweeping or training the second artificial intelligence network. For example, the number of elements, element phase information, amplitude information and label information of received energy or RSRP are input into the first artificial intelligence network to train N beam configuration parameters of the first type of beam for the beam sweeping or the beam training.

The second artificial intelligence network is mainly used for selecting at least one beam in a beam set for receiving or sending information. The information includes, but is not limited to, signaling or data. For example, M transmit beams and N receive beams are present, M and N are positive integers, and each of the M transmit beams corresponds to at least one CSI-RS resource or at least one CSI-RS resource set. The received CSI-RS resources or RSRP corresponding to the CSI-RS resources is input into the second artificial intelligence network, the second artificial intelligence network maps at least one input RSRP to an index of the optimal beam, that is, a beam index or a beam pair index for information transmission. The second artificial intelligence network uses the corresponding receive beam for transmitting information and feeds back a transmit beam index to the base station for the base station to transmit information. In an embodiment, the above RSRP may also be replaced with SINRs corresponding to the CSI-RS resources to select the beam index or the beam pair index. In an embodiment, the above M transmit beams may be a subset of all selectable beams, and the N beams may be a subset of all the selectable beams. Therefore, beams in all beam sets can be predicted in a beam subset through the second artificial intelligence network, that is, an effect of spatial domain interpolation is achieved to reduce an overhead of resources when beam sweeping is performed.

For example, assuming that 128 transmit beams and 32 receive beams are present, M = 16 transmit beams and N = 4 receive beams are uniformly selected therefrom for beam training. The received RSRP corresponding to the 16 transmit beams and the 4 receive beams is input to the second artificial intelligence network to predict the optimal beam in the case of the 128 transmit beams and the 32 receive beams. That is, the second artificial intelligence network is mainly used for selecting the second type of beam. When the parameter of the second artificial network is trained, the first type of beam may be used to reduce the number of training beams or an overhead.

The third artificial intelligence network is mainly used for associating or mapping the first type of beam and the second type of beam. For example, the first type of beam and corresponding received RSRP or SINRs are input, and the corresponding second type of beam or a beam index is output.

For the base station side, to reduce the number of times of training of the second artificial intelligence network to achieve an object of reducing an overhead of resources, the base station may configure the beam configuration parameter for the terminal based on the acquired terminal beam capability and send the configured beam configuration parameter to the terminal. After receiving the beam configuration parameter, the terminal may generate a beam for transmitting information based on the beam configuration parameter. For example, a receive beam for receiving information is generated in downlink. The terminal respectively receives, according to the generated M receive beams, reference signals, such as CSI-RS resources for beam training, sent by the base station by respectively using N transmit beams, and at least one of receiving information corresponding to the N receive beams respectively received by the M receive beams, or the RSRP or SINR corresponding to the receiving information is used as one sample. An optimal transmit beam index and receive beam index corresponding to the sample are used as a label, and samples and labels of multiple terminals at one or more moments are collected as the input of the second artificial intelligence network to update the parameter of the second artificial intelligence network.

In an embodiment, to reduce the number of times of beam sweeping to achieve an object of reducing the overhead of resources, the base station may configure the beam configuration parameter for the terminal based on the acquired terminal beam capability and send the configured beam configuration parameter to the terminal. The terminal receives the beam configuration parameter sent by the base station, and determines a beam for transmitting information according to the received beam configuration parameter, for example, the terminal generates a receive beam for receiving information in downlink. The terminal respectively receives, according to the generated M receive beams, reference signals, such as CSI-RS resources for beam training, sent by the base station by respectively using N transmit beams, and at least one of the receiving information corresponding to the N receive beams respectively received by the M receive beams, or the RSRP or SINR corresponding to the receiving information is used as a basis for selecting the beam, for example, a transmit beam and a receive beam corresponding to the maximum value of the RSRP or SINRs corresponding to M*N beam pairs is used as the beam for transmitting information.

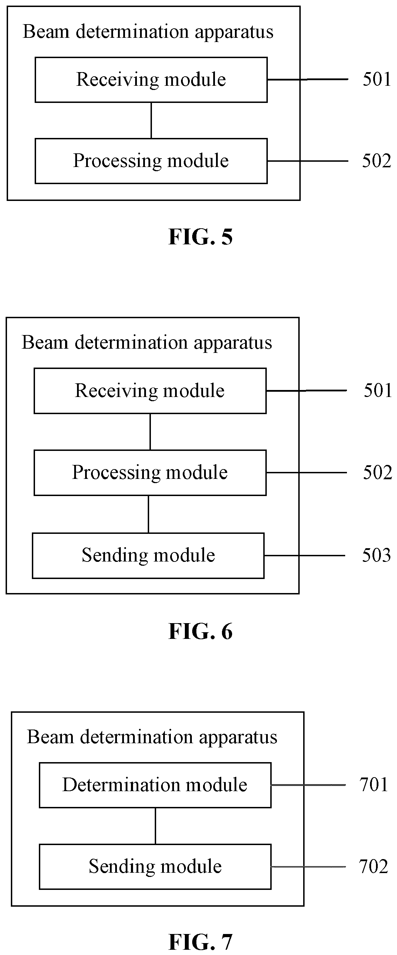

FIG. 5 is a structure diagram of a beam determination apparatus according to an embodiment of the present application. As shown in FIG. 5, the apparatus may include a receiving module 501 and a processing module 502. The receiving module is configured to receive a beam configuration parameter, and the processing module is configured to determine a first type of beam according to the beam configuration parameter.

In an embodiment, the above beam configuration parameter may be determined through a first artificial intelligence network.

Exemplarily, the beam configuration parameter includes at least one of the following: a beam width, the number of beam directions, an array element phase, array element power, a beam gain, a beam index, a beam combination, or an initial index of a random beam.

The first type of beam includes at least one of the following: a wide beam, an irregular beam, a multi-directional beam, a random beam or a non-constant mode beam.

Further, the first type of beam is used for acquiring a value of a parameter of a second artificial intelligence network.

In an example, the above processing module is further configured to determine a second type of beam according to the first type of beam and the parameter of the second artificial intelligence network. The second type of beam is used for transmitting signaling or data.

In an embodiment, a mapping relationship exists between the first type of beam and the second type of beam.

In an example, the processing module may be configured to determine the mapping relationship between the first type of beam and the second type of beam by using a third artificial intelligence network; the processing module may also be configured to determine the mapping relationship between the first type of beam and the second type of beam in an agreed manner; the receiving module may further be configured to receive configuration signaling, and correspondingly, the processing module may be configured to determine the mapping relationship between the first type of beam and the second type of beam in a manner of the configuration signaling.

In an example, the receiving module may further be configured to receive a gain difference between the first type of beam and the second type of beam, and the gain difference is used for determining transmit power of the second type of beam.

As shown in FIG. 6, the above apparatus may further include a sending module 503, the sending module is configured to send a terminal beam capability of the apparatus, and the terminal beam capability includes at least one of the following: a capability of supporting the first type of beam, a capability of supporting a beam type of the first type of beam, or a capability of processing the first type of beam.

The beam determination apparatus provided in the present embodiment is configured to implement the beam determination method in the embodiment shown in FIG. 3. Implementation principles and technical effects are similar and are not repeated here.

FIG. 7 is a structure diagram of a beam determination apparatus according to an embodiment of the present application. As shown in FIG. 7, the apparatus may include a determination module 701 and a sending module 702, the determination module is configured to determine a beam configuration parameter, and the sending module is configured to send the beam configuration parameter.

The beam configuration parameter is used for determining a first type of beam.

In an embodiment, the above beam configuration parameter may be determined through a first artificial intelligence network.

Exemplarily, the beam configuration parameter includes at least one of the following: a beam width, the number of beam directions, an array element phase, array element power, a beam gain, a beam index, a beam combination or an initial index of a random beam.

The first type of beam includes at least one of the following: a wide beam, an irregular beam, a multi-directional beam, a random beam or a non-constant mode beam.

Further, the first type of beam is also used for acquiring a value of a parameter of a second artificial intelligence network.

In an example, the above first type of beam and parameter of the second artificial intelligence network may be used for determining a second type of beam, and the second type of beam is used for transmitting signaling or data.

In an embodiment, a mapping relationship exists between the first type of beam and the second type of beam.

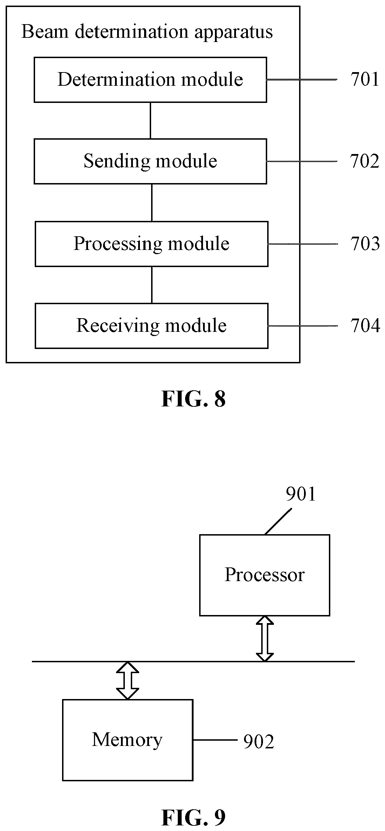

As shown in FIG. 8, in an example, the above apparatus may further include a processing module 703 and a receiving module 704, the processing module is configured to determine the mapping relationship between the first type of beam and the second type of beam by using a third artificial intelligence network, and the processing module may also be configured to determine the mapping relationship between the first type of beam and the second type of beam in an agreed manner.

In an embodiment, the sending module may further be configured to send configuration signaling, and correspondingly, the processing module may also be configured to determine the mapping relationship between the first type of beam and the second type of beam through the configuration signaling.

In an example, the sending module may further be configured to send a gain difference between the first type of beam and the second type of beam, and the gain difference is used for determining transmit power of the second type of beam.

The receiving module may be configured to receive a terminal beam capability, and the terminal beam capability includes at least one of the following:
a capability of supporting the first type of beam, a capability of supporting a beam type of the first type of beam, or a capability of processing the first type of beam.

The beam determination apparatus provided in the present embodiment is configured to implement the beam determination method in the embodiment shown in FIG. 4. Implementation principles and technical effects are similar and are not repeated here.

FIG. 9 is a structure diagram of a communication node according to an embodiment. As shown in FIG. 9, the node includes a processor 901 and a memory 902. The number of processors 901 in the node may be one or more, and one processor 901 is used as an example in FIG. 9. The processor 901 and the memory 902 in the node may be connected through a bus or in other manners. In FIG. 9, the connection through the bus is used as an example.

As a computer-readable storage medium, the memory 902 may be used for storing software programs, computer-executable programs and modules, such as program instructions/modules (for example, each module in the beam determination apparatuses provided in the embodiments in FIGS. 5 to 8) corresponding to the beam determination methods in the embodiments in FIGS. 3 and 4 of the present application. The processor 901 implements the above beam determination methods by running the software programs, instructions and modules stored in the memory 902.

The memory 902 may mainly include a program storage region and a data storage region. The program storage region may store an operating system and an application program required by at least one function. The data storage region may store data created according to the use of a set-top box. In addition, the memory 902 may include a high-speed random-access memory and may further include a non-volatile memory, such as at least one disk memory, a flash memory or another non-volatile solid-state memory.

In an example, where possible, the processor in the above node may also implement the above beam determination methods by using a hardware circuit, such as an internal logic circuit or a gate circuit.

An embodiment of the present application provides a readable and writeable storage medium configured for computer storage. The storage medium stores one or more programs executable by one or more processors to implement the beam determination method provided in the embodiments of the present application.

It is to be understood by those of ordinary skill in the art that some or all steps in the preceding disclosed method and function modules/units in the device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components are implementable as software executed by a processor such as a central processing unit, a digital signal processor, or a microprocessor, are implementable as hardware, or are implementable as integrated circuits such as application-specific integrated circuits. Such software may be distributed on computer-readable media. The computer-readable media may include computer storage media (or non-transitory media) and communication media (or transitory media). As known to those having ordinary skill in the art, the term, the computer storage media, includes volatile and non-volatile as well as removable and non-removable media implemented in any method or technology for storing information (such as computer-readable instructions, data structures, program modules, or other data). The computer-storage medium includes, but is not limited to, a random-access memory (RAM), a read-only memory (ROM), an electrically erasable programmable read-only memory (EEPROM), a flash memory, or other memory technologies, a compact disc read-only memory (CD-ROM), a digital video disk (DVD) or other optical disc storage, a magnetic cassette, a magnetic tape, disk storage or other magnetic storage apparatus, or any other medium used to store the desired information and accessible by a computer. Moreover, as known to those having ordinary skill in the art, the communication media generally include computer-readable instructions, data structures, program modules, or other data in carriers or in modulated data signals transported in other transport mechanisms and may include any information delivery medium.

## Claims

1. A beam determination method, comprising:
receiving a beam configuration parameter; and
determining a first type of beam according to the beam configuration parameter.

2. The method according to claim 1, wherein the beam configuration parameter is determined through a first artificial intelligence network.

3. The method according to claim 1 or 2, wherein the beam configuration parameter comprises at least one of:
a beam width, a number of beam directions, an array element phase, array element power, a beam gain, a beam index, a beam combination, or an initial index of a random beam.

4. The method according to claim 1 or 2, wherein the first type of beam comprises at least one of:
a wide beam, an irregular beam, a multi-directional beam, a random beam or a non-constant mode beam.

5. The method according to claim 1, wherein the first type of beam is used for acquiring a value of a parameter of a second artificial intelligence network.

6. The method according to claim 5, further comprising:
determining a second type of beam according to the first type of beam and the parameter of the second artificial intelligence network;
wherein the second type of beam is used for transmitting signaling or data.

7. The method according to claim 6, wherein a mapping relationship exists between the first type of beam and the second type of beam.

8. The method according to claim 7, further comprising at least one of:
determining, through a third artificial intelligence network, the mapping relationship between the first type of beam and the second type of beam;
determining, in an agreed manner, the mapping relationship between the first type of beam and the second type of beam; or
determining, in a manner of receiving configuration signaling, the mapping relationship between the first type of beam and the second type of beam.

9. The method according to claim 1 or 5, further comprising:
receiving a gain difference between the first type of beam and a second type of beam;
wherein the gain difference is used for determining transmit power of the second type of beam.

10. The method according to claim 1, wherein before receiving the beam configuration parameter, the method further comprises:
sending a terminal beam capability;
wherein the terminal beam capability comprises at least one of:
a capability of supporting the first type of beam, a capability of supporting a beam type of the first type of beam, or a capability of processing the first type of beam.

11. A beam determination method, comprising:
determining a beam configuration parameter; and
sending the beam configuration parameter;
wherein the beam configuration parameter is used for determining a first type of beam.

12. The method according to claim 11, wherein the beam configuration parameter is determined through a first artificial intelligence network.

13. The method according to claim 11 or 12, wherein the beam configuration parameter comprises at least one of:
a beam width, a number of beam directions, an array element phase, array element power, a beam gain, a beam index, a beam combination, or an initial index of a random beam.

14. The method according to claim 11 or 12, wherein the first type of beam comprises at least one of:
a wide beam, an irregular beam, a multi-directional beam, a random beam or a non-constant mode beam.

15. The method according to claim 11, wherein the first type of beam is used for acquiring a value of a parameter of a second artificial intelligence network.

16. The method according to claim 15, wherein the first type of beam and the parameter of the second artificial intelligence network are used for determining a second type of beam;
wherein the second type of beam is used for transmitting signaling or data.

17. The method according to claim 16, wherein a mapping relationship exists between the first type of beam and the second type of beam.

18. The method according to claim 17, further comprising at least one of:
determining, through a third artificial intelligence network, the mapping relationship between the first type of beam and the second type of beam;
determining, in an agreed manner, the mapping relationship between the first type of beam and the second type of beam; or
determining, in a manner of sending configuration signaling, the mapping relationship between the first type of beam and the second type of beam.

19. The method according to claim 11 or 15, further comprising:
sending a gain difference between the first type of beam and a second type of beam;
wherein the gain difference is used for determining transmit power of the second type of beam.

20. The method according to claim 11, wherein before sending the beam configuration parameter, the method further comprises:
receiving a terminal beam capability;
wherein the terminal beam capability comprises at least one of:
a capability of supporting the first type of beam, a capability of supporting a beam type of the first type of beam, or a capability of processing the first type of beam.

21. A communication node, comprising a processor, wherein the processor, when executing a computer program, implements the beam determination method according to any one of claims 1 to 10 or the beam determination method according to any one of claims 11 to 20.

22. A readable and writeable storage medium storing a computer program which, when executed by a processor, implements the beam determination method according to any one of claims 1 to 10 or the beam determination method according to any one of claims 11 to 20.
